# EUROPEAN PATENT SPECIFICATION

(11) **EP 4 345 668 B1**
(45) Date of publication and mention of the grant of the patent: **28.10.2026**
(21) Application number: 21963116.5
(22) Date of filing: 08.12.2021
(51) Int. Cl.: G06F 21/60, G06F 21/57, G06F 21/62, G06F 21/64

(54) **DATA CHECK METHOD AND APPARATUS, ELECTRONIC DEVICE AND COMPUTER READABLE STORAGE MEDIUM**
DATENPRÜFVERFAHREN UND -VORRICHTUNG, ELEKTRONISCHE VORRICHTUNG UND COMPUTERLESBARES SPEICHERMEDIUM
PROCÉDÉ ET APPAREIL DE VÉRIFICATION DE DONNÉES, DISPOSITIF ÉLECTRONIQUE ET SUPPORT D'ENREGISTREMENT LISIBLE PAR ORDINATEUR

(30) Priority: 05.11.2021 CN 202111308084
(43) Date of publication of application: 03.04.2024
(73) Proprietor: Rolling Wireless S.À R.L., 2540 Luxembourg (LU)
(72) Inventor: GU, Shiwen, Shenzhen, Guangdong 518055 (CN)
(74) Representative: Dennemeyer & Associates S.A.
(86) International application number: PCT/CN2021/136386
(87) International publication number: WO 2023/077610

(56) References cited:
- WO-A1-2019/075800
- CN-A- 104 750 521
- CN-A- 104 750 521
- CN-A- 105 100 039
- CN-A- 107 729 198
- CN-A- 110 837 376
- CN-A- 112 328 269
- CN-A- 112 379 898
- CN-A- 112 379 898
- US-A1- 2017 097 830

## Description

### CROSS REFERENCE TO RELATED APPLICATIONS

This application claims priority to Chinese Patent Application No. 202111308084.1, filed to the Chinese Patent Office on 5 November 2021 and entitled "Data Verification Method and Apparatus, Electronic Device And Computer-Readable Storage Medium".

### FIELD

This application relates to the technical field of operating systems, in particular to a data verification method and apparatus, an electronic device and a computer-readable storage medium.

### BACKGROUND

Various modern smart devices have operating system with various architectures respectively. These smart devices have many common characteristics, for example, they all have processors and storage media, and after each smart device is activated through a power button, the processor is capable of reading data from the storage medium, performs preparatory work on each component according to the read data and finally enters a running state.

In order to prolong a service life of the storage medium, an unsorted block image (UBI) appears with capability of performing wear balancing protection on the storage medium. The UBI not only has a function of wear balancing protection, but also has a function of verifying data integrity. when a system is started, the UBI is activated and the functions of the UBI are executed. However, the UBI spends long time verifying the data integrity, which increases time of starting up the system.

Apparently, how to shorten time of starting up in the condition that data integrity is guaranteed is a problem to be solved by those skilled in the art.

WO2019075800A1 relates to a firmware verification method for an Android system. The method includes starting a mirror image file, reading system partition content, performing a legitimacy verification on a system verification file, mounting the system partition content if the legitimacy verification is successful, performing an integrity verification on the system partition content, setting a completion mask in a user data area if the integrity verification is successful, and stopping operating if the integrity verification is not successful.

### SUMMARY

Objectives of embodiments of this application are to provide a data verification method according to independent claim 1, a data verification apparatus according to independent claim 7, an electronic device according to independent claim 8 and a computer-readable storage medium according to independent claim 9, which may shorten time for starting up while data integrity is guaranteed.

In order to solve the above technical problem, an embodiment of this application provides a data verification method, including:
establishing a UBI image;
mounting the UBI image in the case of starting a system, and verifying the UBI image;
creating verification device nodes based on a UBI image in the case that the UBI image passes the verification; and
performing integrity verification on data stored on a storage medium by using a verification device connected with the verification device nodes after the system starting is completed;
establishing the UBI image includes:
   generating, according to a code compiling result, a file system image which supports mounting the verification device nodes;
   generating a corresponding identity list according to the file system image, the identity list includes identity of each data block in the file system image and parent identity of the file system image;
   performing digital signature on the parent identity according to a preset secret key to obtain a signature file including the secret key and an encrypted parent identity; and
   designating the whole of the file system image, the identity list and the signature file as the UBI image and setting an identity of skipping performing the integrity verification for the UBI image.

Optionally, verifying the UBI image includes:
reading a pre-stored secret key;
judging whether the pre-stored secret key is consistent with the secret key included in the signature file; and
determining that the UBI image passes the verification in the case that the pre-stored secret key is consistent with the secret key included in the signature file.

Optionally, the method further includes:
decrypting the parent identity included in the signature file by using the secret key in the case that the pre-stored secret key is consistent with the secret key included in the signature file;
judging whether the parent identity obtained through decryption is consistent with the parent identity included in the identity list; and
executing the step of creating verification device nodes based on the UBI image in the case that the parent identity obtained through decryption is consistent with the parent identity included in the identity list.

Optionally, creating verification device nodes based on the UBI image includes:
creating a character device based on the UBI image in a partition flashed with the UBI image;
creating a virtual block device based on the UBI image; and
mounting the verification device nodes based on the virtual block device.

Optionally, before mounting the verification device nodes based on the virtual block device, the method further includes:
judging whether the UBI image meets a preset starting-up verification demand; and
executing the step of mounting the verification device nodes based on the virtual block device in the case that the UBI image meets the preset starting-up verification demand.

Optionally, before performing integrity verification on the data stored on the storage medium by using the verification device connected with the verification device nodes, the method further includes:
reading data from the storage medium;
performing a data recovery operation on the data by using the virtual block device; and
correspondingly, performing integrity verification on the data stored on the storage medium by using the verification device connected with the verification device nodes includes:
   performing integrity verification on data of which the data recovery operation is completed by using the verification device connected with the verification device nodes.
   Optionally, the identity list further includes identities and parent identities corresponding to other file data in addition to the file system image; and
   correspondingly, performing integrity verification on the data of which the data recovery operation is completed by using the verification device connected with the verification device nodes includes:
      verifying an identity and a parent identity corresponding to the data of which the data recovery operation is completed by using the verification device connected with the verification device nodes according to the identities and the parent identities included in the identity list.

Optionally, in the case that it is determined that the data of which the data recovery operation is completed passes the integrity verification, the method further includes:
storing the data passing the integrity verification into a set cache region.

An embodiment of this application further provides a data verification apparatus, including an establishing unit, a mounting unit, an identity verification unit, a creating unit and an integrity verification unit.

The establishing unit is configured to establish a UBI image;
the mounting unit is configured to mount the UBI image in the case of starting a system;
the identity verification unit is configured to verify the UBI image;
the creating unit is configured to create verification device nodes based on the UBI image in the case that the UBI image passes the verification; and
the integrity verification unit is configured to perform integrity verification on data stored on a storage medium by using a verification device connected with the verification device nodes after the system starting is completed;
the establishing unit includes a generating sub-unit, a signature sub-unit, an action sub-unit and a setting sub-unit,
the generation sub-unit is configured to generate, according to a code compiling result, a file system image which supports mounting the verification device nodes;
the signature sub-unit is configured to generate a corresponding identity list according to the file system image, the identity list includes identity of each data block in the file system image and parent identity of the file system image;
the action sub-unit is configured to perform digital signature on the parent identity according to a preset secret key to obtain a signature file including the secret key and an encrypted parent identity; and
the setting sub-unit is configured to designate the while of the file system image, the identity list and the signature file as the UBI image and set an identity of skipping performing the integrity verification for the UBI image.

Optionally, the identity verification unit includes a reading sub-unit, a judgment sub-unit and a determining sub-unit.

The reading sub-unit is configured to read a pre-stored secret key;
the judgment sub-unit is configured to judge whether the pre-stored secret key is consistent with the secret key included in the signature file; and
the determining sub-unit is configured to determine that the UBI image passes the verification in the case that the pre-stored secret key is consistent with the secret key included in the signature file.

Optionally, the apparatus further includes a decryption unit and a judgment unit.

The decryption unit is configured to decrypt the parent identity included in the signature file by using the secret key in the case that the pre-stored secret key is consistent with the secret key included in the signature file; and
the judgment unit is configured to judge whether the parent identity obtained through decryption is consistent with the parent identity included in the identity list; and trigger the creating unit to execute the step of creating verification device nodes based on the UBI image in the case that the parent identity obtained through decryption is consistent with the parent identity included in the identity list.

Optionally, the creating unit is configured to create a character device based on the UBI image in a partition flashed with the UBI image; create a virtual block device based on the UBI image; and mount the verification device nodes based on the virtual block device.

Optionally, the apparatus further includes a starting-up verification unit.

The starting-up verification unit is configured to judge whether the UBI image meets a preset starting-up verification demand; and trigger the creating unit to execute the step of mounting the verification device nodes based on the virtual block device in the case that the UBI image meets the preset starting-up verification demand.

Optionally, the apparatus further includes a reading unit and a recovery unit.

The reading unit is configured to read data from the storage medium;
the recovery unit is configured to perform a data recovery operation on the data by using the virtual block device; and
correspondingly, the integrity verification unit is configured to perform integrity verification on the data of which the data recovery operation is completed by using the verification device connected with the verification device nodes.

Optionally, the identity list further includes identities and parent identities corresponding to other file data in addition to the file system image; and
correspondingly, the integrity verification unit is configured to verify an identity and a parent identity corresponding to the data of which the data recovery operation is completed by using the verification device connected with the verification device nodes according to the identities and the parent identities included in the identity list.

Optionally, the apparatus further includes a cache unit.

The cache unit is configured to store the data passing the integrity verification into a set cache region.

An embodiment of this application further provides an electronic device, including:
a memory, configured to store a computer program; and
a processor, configured to execute the computer program so as to implement steps of the data verification method described as above.

An embodiment of this application further provides a computer-readable storage medium, storing a computer program, the computer program, when executed by a processor, implementing steps of the data verification method described as above.

Details of one or more embodiments of this application are set forth in the following accompanying drawings and description. Other features, objectives and strengths of this application will become clear from the specification, the accompanying drawings and the claims.

### BRIEF DESCRIPTION OF THE DRAWINGS

In order to more clearly describe the embodiments of this application, the accompanying drawings needed in the embodiments will be briefly introduced below. Apparently, the accompanying drawings in the following description are merely some embodiments of this application, and those ordinarily skilled in the art may also obtain other accompanying drawings according to these accompanying drawings without making creative efforts.
Fig. 1 is a flowchart of a data verification method provided by an embodiment of this application.
Fig. 2 is a flowchart of a method for establishing a UBI image provided by an embodiment of this application.
Fig. 3 is a flowchart of a method for creating verification device nodes based on the UBI image provided by an embodiment of this application.
Fig. 4 is a schematic structural diagram of a data verification apparatus provided by an embodiment of this application.
Fig. 5 is a structural diagram of an electronic device provided by an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by those ordinarily skilled in the art based on the embodiments of this application without making creative efforts fall within the protection scope of this application.

Terms "include" and "have" and any of their variants in the specification, the claims and the above accompanying drawings of this application are intended to cover non-exclusive inclusion. For example, a process, a method, a system, a product or a device that includes a series of steps or units is not limited to the listed steps or units and may include steps or units that are not listed.

In order to make those skilled in the art better understand the solutions of this application, this application is further described in detail below with reference to the accompanying drawings and the detailed description.

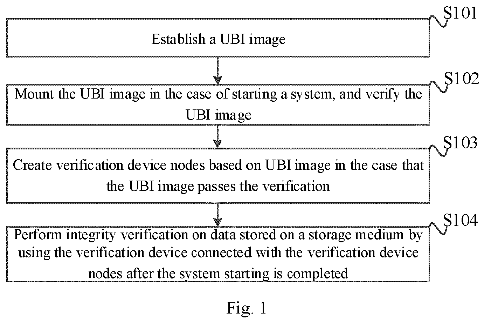

A data verification method provided by an embodiment of this application is introduced in detail below. Fig. 1 is a flowchart of a data verification method provided by an embodiment of this application, which is not according to the invention and are present for illustration purposes only. The method includes:
S101: a UBI image is established.

The UBI image needs to be mounded in the case of starting a system, and a virtual block device based on the UBI image implements a work needing to be executed in the case of starting the system. In a conventional technology, a work of data integrity verification is set in the virtual block device of the UBI image, but data integrity verification needs to take a long time, so system starting-up delay is caused.

Thus, in specific implementation, a kernel code program for establishing the UBI image may be modified, so that the established UBI image does not start a function of integrity verification, and the function of integrity verification is executed by a verification device. The verification device may be started after the system starting is completed, so that an executing flow of the data integrity verification does not affect system starting-up time.

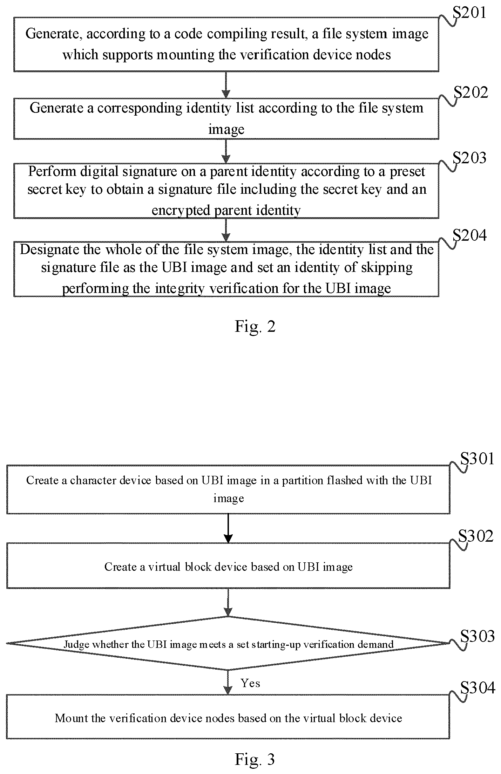

In the embodiment of this application, the established UBI image may include a file system image, an identity list, a signature file and the like, and specific establishing flows may refer to introduction in Fig. 2, which is not repeated here.

S102: the UBI image is mounted in the case of starting the system, and the UBI image is verified.

In the embodiment of this application, in order to guarantee validity of UBI mapping, an identity of the UBI image may be verified. In specific implementation, the identity of the UBI image may be verified in a mode of setting an identity mark.

Given that the corresponding signature file may be generated when the UBI image is established, the signature file includes a secret key for performing encryption processing on data. When the UBI mapping belongs to an invalid established UBI image, the secret key included in the signature file usually changes. Thus, in actual application, identity verification may also be performed on the UBI image by using the secret key.

In specific implementation, a secret key used by the signature file may be pre-stored. When the UBI image may be verified, the pre-stored secret key may be read; and whether the pre-stored secret key is consistent with the secret key included in the signature file is judged.

In the case that the pre-stored secret key is consistent with the secret key included in the signature file, it indicates that the secret key included in the signature file of the UBI mapping is consistent with a secret key used when the UBI mapping is theoretically established, that is, the UBI mapping belongs to the valid created UBI mapping, and at the moment, it may be determined that the UBI image passes the verification.

S103: verification device nodes based on the UBI image are created in the case that the UBI image passes the verification.

The verification device nodes may be regarded as a virtual interface provided by the UBI mapping, the UBI image may be connected with the verification device through the verification device nodes, and thus integrity verification is performed on the data through the verification device connected with the verification device nodes instead of performing integrity verification on the data through the UBI image.

S104: integrity verification is performed on data stored on a storage medium by using the verification device connected with the verification device nodes after the system starting is completed.

As the current UBI image does not start the function of integrity verification, in order to implement integrity verification on the data, the verification device nodes based on the UBI image may be created. The work of data integrity verification is implemented by using the verification device connected with the verification device nodes.

In specific implementation, the verification device may adopt DM verity. The DM verity is a target of a device mapper (DM, a kernel-based senior volume management technical framework) and is dedicated to verification of a file system. The DM verity technology is characterized by verifying data to be used, and is capable of verifying data integrity.

It may be seen from the above technical solution that the UBI image is established; and the UBI image is mounted in case of starting the system, and in order to guarantee validity of the UBI image, the UBI image may be verified. When the UBI image passes the verification, it indicates that the UBI image is valid, and at the moment, the verification device nodes based on the UBI image may be created. The verification device nodes are connected with the verification device, and the verification device may run after the system starting is completed and is configured to perform integrity verification on the data. In other words, integrity verification is performed on the data stored on the storage medium by using the verification device connected with the verification device nodes after the system starting is completed. In the technical solution, the verification device nodes are created, the verification device nodes may implement connection with the verification device, the verification device may be started after the system starting is completed, so that the work of the data integrity verification may be executed after the system starting is completed, and thus the starting-up time is shortened while the data integrity is guaranteed.

Fig. 2 is a flowchart of a method for establishing a UBI image provided by an embodiment of this application. The method includes:
S201: a file system image which supports mounting the verification device nodes is generated according to a code compiling result.

In the embodiment of this application, the established UBI image may include three parts of contents, namely, the file system image, the identity list and the signature file.

The file system image may implement the function of starting the system by mounting the virtual block device. The identity list may be used for verifying the validity of the file system image, and executing the data integrity verification needs to depend on the identity list. The signature file is used for verifying a parent identity.

In specific implementation, the kernel code program for establishing the UBI image may be modified, so that the file system image generated through compiling based on the kernel code program may support mounting the verification device nodes.

S202: the corresponding identity list is generated according to the file system image.

In a system starting stage, in order to guarantee the validity of the mounted UBI image, the identity list is generated when the UBI image is established.

The identity list may include identity of each data block in the file system image and a parent identity of the file system image.

In actual application, the identity list may be generated in a mode of a hash operation. A hash value of each data block is used as an identity of the data block. The hash operation is performed on the hash values of all the data blocks to obtain a root hash as the parent identity of the file system image.

S203: digital signature is performed on the parent identity according to a preset secret key to obtain a signature file including the secret key and an encrypted parent identity.

By performing encryption processing on the parent identity and storing the encrypted parent identity in a form of a signature file, storage security of the parent identity may be improved.

S204: the whole of the file system image, the identity list and the signature file are designated as the UBI image and an identity of skipping performing the integrity verification is set for the UBI image.

In the embodiment of this application, in order not to make the UBI image execute the function of the data integrity verification in the system starting stage, the identity of skipping performing the integrity verification may be set for the UBI image.

In the system starting stage, whether the UBI image has the identity of skipping performing the integrity verification is judged, and when the UBI image has the identity of skipping preforming the integrity verification, the verification device nodes based on the UBI image may be created automatically, so that the integrity verification may be performed on the data by using the verification device connected with the verification device nodes instead of performing the integrity verification on the data through the UBI image.

In the embodiment of this application, in order to shorten the starting-up time, the UBI image is improved so that the improved UBI image does not execute the work of the data integrity verification any more in the case of starting the system, and thus system starting time is shortened. Besides, in order to implement the integrity verification on the data, the verification device nodes may be introduced. After the system starting is completed, the integrity verification is performed on the data by using the verification device connected with the verification device nodes, so that the UBI image established based on the modified kernel code program may support mounting the verification device nodes.

In view of convenient data processing in actual application, the file system image corresponding to the UBI image may be divided into a plurality of data blocks. Thus, the corresponding hash value may be calculated for each data block and used as the identity of the data block. The root hash may be obtained through calculation based on the hash values of all the data blocks and may be used as the parent identity of the UBI image.

In actual application, after the identity of the UBI mapping is verified based on the secret key, the validity of the UBI mapping may be verified based on the parent identity.

The parent identity included in the signature file may be decrypted by using the secret key in the case that the pre-stored secret key is consistent with the secret key included in the signature file. Whether the parent identity obtained through decryption is consistent with the parent identity included in the identity list is judged.

In the case that the parent identity obtained through decryption is consistent with the parent identity included in the identity list, it indicates that the mounted UBI image is valid.

In the embodiment of this application, verification of the validity of the UBI mapping may be implemented through the secret key included in the signature file based on the UBI image. The signature file is decrypted by using the secret key so that the valid parent identity may be obtained. In the case that the parent identity obtained through decryption is consistent with the parent identity included in the identity list in the UBI image, it indicates that the UBI image is not tampered. Therefore, verification of the validity of the UBI mapping may be implemented based on the parent identity included in the identity list in the UBI image.

Fig. 3 is a flowchart of a method for creating verification device nodes based on the UBI image provided by an embodiment of this application. The method includes:
S301: a character device based on the UBI image is created in a partition flashed with the UBI image.

The UBI image includes a character device and a virtual block device. When the verification device nodes are created, the character device and the virtual block device of the UBI mapping need to be created first.

In actual application, the UBI image has its corresponding partition, and the character device based on the UBI image may be created in the partition flashed with the UBI image;
S302: the virtual block device based on the UBI image is created.

The virtual block device may be used for providing a management function of the UBI image. Mounting of the verification device nodes may be implemented by using the virtual block device.

S303: whether the UBI image meets a set starting-up verification demand is judged.

The starting-up verification demand means that the UBI image does not execute the data integrity verification and may support mounting the verification device nodes.

In the embodiment of this application, the starting-up verification demand may include judging whether skipping performing the function of the integrity verification is set for the UBI image and whether the UBI image includes the file system image, the identity list and the signature file.

In the case that skipping performing the function of the integrity verification is set for the UBI image and the UBI image includes the file system image, the identity list and the signature file, it indicates that the UBI image meets the set starting-up verification demand, and at the moment, S304 may be executed.

S304: the verification device nodes are mounted based on the virtual block device.

The verification device connected with the verification device nodes may be configured to perform integrity verification on the data stored on the storage medium after the system starting is completed. In actual application, the verification device may adopt DM verity.

The verification device, when executing the data integrity verification, may read the data from the storage medium and perform the integrity verification on the read data based on a verification flow of the verification device.

In the embodiment of this application, by setting the starting-up verification demand, it may be guaranteed that the UBI image supports mounting the verification device nodes, so as to guarantee that after the system starting is completed, the work of the data integrity verification may be smoothly executed based on the verification device connected with the verification device nodes.

Given that in actual application, after the system starting is completed, the virtual block device of the UBI image may continue playing a role and thus is used for performing a data recovery operation on the data. Therefore, before performing the integrity verification on the data by using the verification device connected with the verification device nodes, the data recovery operation may be performed on the data by using the virtual block device; and then the integrity verification is performed on the data of which the data recovery operation is completed by using the verification device connected with the verification device nodes.

The data recovery operation may include automatically solving problems of a bad block, bit flipping, wear and the like.

In actual application, when there is no need for performing the data recovery operation on the data, the integrity verification may be performed on the data of which the data recovery operation is completed directly by using the verification device connected with the verification device nodes after the data are read.

In the embodiment of this application, the identity list may further include identities and parent identities corresponding to other file data in addition to the file system image. Correspondingly, performing the integrity verification on the data of which the data recovery operation is completed by using the verification device connected with the verification device nodes may include: an identity and a parent identity corresponding to the data of which the data recovery operation is completed are verified by using the verification device connected with the verification device nodes according to the identities and the parent identities included in the identity list.

Taking the other file data in addition to the file system image as an example, in specific implementation, whether an identity value of the data of which the data recovery operation is completed matches an identity value in the identity list may be judged.

The identity value may adopt a hash value, the data may be stored in a form of divided data blocks, and each data block has its corresponding hash value. The hash value of each data block is recorded in the identity list.

In actual application, a hash value of the data of which the data recovery operation is completed may be calculated, this hash value is compared with the hash values recorded in the identity list, and when a hash value consistent with this calculated hash value exists in the identity list, it indicates that the data are not tampered.

It is considered that there may exist a situation that in actual application, the data stored on the storage medium is tampered, the hash value corresponding to the data in in the identity list is also tampered, and consequently, the calculated hash value of the data is consistent with the hash value in the identity list. The parent identity is determined based on the identity value of each data block, so a situation that the data is tampered but the calculated parent identity is consistent with the parent identity recorded in the identity list hardly exists, thus, in the embodiment of this application, when the identity value of the data of which the data recovery operation is completed matches the identity value in the identity list, a to-be-verified parent identity may be determined based on the data of which the data recovery operation is completed and residual data in the storage medium. Whether the to-be-verified parent identity is consistent with the parent identity included in the identity list is judged.

When the to-be-verified parent identity is consistent with the parent identity included in the identity list, it indicates that the data is not tampered, and at the moment, it may be determined that the data of which the data recovery operation is completed passes the integrity verification.

After determining that the data of which the data recovery operation is completed passes the integrity verification, the data passing the integrity verification may be stored into a set cache region, so that data reading and calling are convenient.

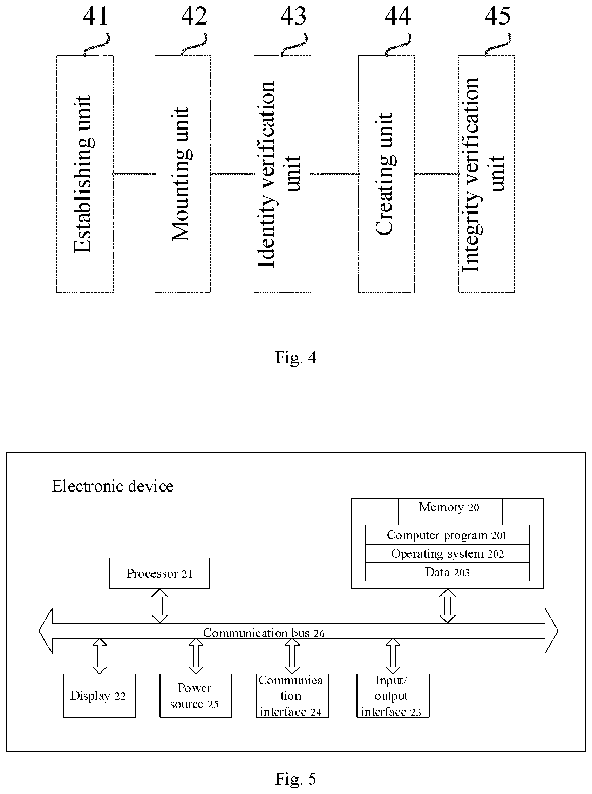

Fig. 4 is a schematic structural diagram of a data verification apparatus provided by an embodiment of this application, which is not according to the invention and are present for illustration purposes only. The data verification apparatus includes an establishing unit 41, a mounting unit 42, an identity verification unit 43, a creating unit 44 and an integrity verification unit 45.

The establishing unit 41 is configured to establish a UBI image.

The mounting unit 42 is configured to mount the UBI image in the case of starting a system.

The identity verification unit 43 is configured to verify the UBI image.

The creating unit 43 is configured to create verification device nodes based on the UBI image in the case that the UBI image passes the verification.

The integrity verification unit 45 is configured to perform integrity verification on data stored on a storage medium by using a verification device connected with the verification device nodes after the system starting is completed.

Optionally, the establishing unit includes a generating sub-unit, a signature sub-unit, an action sub-unit and a setting sub-unit.

The generating sub-unit is configured to generate, according to a code compiling result, a file system image which supports mounting the verification device nodes.

The signature sub-unit is configured to generate a corresponding identity list according to the file system image. The identity list includes identity of each data block in the file system image and parent identity of the file system image.

The action sub-unit is configured to perform digital signature on the parent identity according to a preset secret key to obtain a signature file including the secret key and an encrypted parent identity.

The setting sub-unit is configured to designate the whole of the file system image, the identity list and the signature file as the UBI image and set an identity of skipping performing the integrity verification for the UBI image.

Optionally, the identity verification unit includes a reading sub-unit, a judgment sub-unit and a determining sub-unit.

The reading sub-unit is configured to read a pre-stored secret key.

The judgment sub-unit is configured to judge whether the pre-stored secret key is consistent with the secret key included in the signature file.

The determining sub-unit is configured to determine that the UBI image passes the verification in the case that the pre-stored secret key is consistent with the secret key included in the signature file.

Optionally, the apparatus further includes a decryption unit and a judgment unit.

The decryption unit is configured to decrypt the parent identity included in the signature file by using the secret key in the case that the pre-stored secret key is consistent with the secret key included in the signature file.

The judgment unit is configured to judge whether the parent identity obtained through decryption is consistent with the parent identity included in the identity list; and trigger the creating unit to execute the step of creating the verification device nodes based on the UBI image in the case that the parent identity obtained through decryption is consistent with the parent identity included in the identity list.

Optionally, the creating unit is configured to create a character device based on the UBI image in a partition flashed with the UBI image; create a virtual block device based on the UBI image; and mount the verification device nodes based on the virtual block device.

Optionally, the apparatus further includes a starting-up verification unit.

The starting-up verification unit is configured to judge whether the UBI image meets a set starting-up verification demand; and trigger the creating unit to execute the step of mounting the verification device nodes based on the virtual block device in the case that the UBI image meets the preset starting-up verification demand.

Optionally, the apparatus further includes a reading unit and a recovery unit.

The reading unit is configured to read data from the storage medium.

The recovery unit is configured to perform a data recovery operation on the data by using the virtual block device.

Correspondingly, the integrity verification unit is configured to perform integrity verification on the data of which the data recovery operation is completed by using the verification device connected with the verification device nodes.

Optionally, the identity list further includes identities and parent identities corresponding to other file data in addition to the file system image.

Correspondingly, the integrity verification unit is configured to verify an identity and a parent identity corresponding to the data of which the data recovery operation is completed by using the verification device connected with the verification device nodes according to the identities and the parent identities included in the identity list.

Optionally, the apparatus further includes a cache unit.

The cache unit is configured to store the data passing the integrity verification into a set cache region.

Description of features in the corresponding embodiment in Fig. 4 may refer to related descriptions of the corresponding embodiments in Fig. 1, Fig. 2 and Fig. 3, which is not repeated here.

It may be seen from the above technical solution that the UBI image is established; and the UBI image is mounted in case of starting the system, and in order to guarantee validity of the UBI image, the UBI image may be verified. When the UBI image passes the verification, it indicates that the UBI image is valid, and at the moment, the verification device nodes based on the UBI image may be created. The verification device nodes are connected with the verification device, and the verification device may run after the system starting is completed and is configured to perform integrity verification on the data. In other words, integrity verification is performed on the data stored on the storage medium by using the verification device connected with the verification device nodes after the system starting is completed. In the technical solution, the verification device nodes based on the UBI image are created, the verification device nodes may implement connection with the verification device, the verification device may be started after the system starting is completed, so that the work of the data integrity verification may be executed after the system starting is completed, and thus the starting-up time is shortened while the data integrity is guaranteed.

Fig. 5 is a structural diagram of an electronic device provided by an embodiment of this application. As shown in Fig. 5, the electronic device includes: a memory 20, configured to store a computer program; and
a processor 21, configured to, when executing the computer program, implement steps of the data verification method in the above embodiment.

The electronic device provided by this embodiment may include, but not limited to, a smart phone, a tablet computer, a notebook computer, a desktop computer or the like.

The processor 21 may include one or more processing cores, such as a 4-core processor, an 8-core processor or the like. The processor 21 may be implemented in at least one hardware form of digital signal processing (DSP), a field-programmable gate array (FPGA) or a programmable logic array (PLA). The processor 21 may also include a main processor and a co-processor, the main processor is a processor configured to process data in a wake-up state, which is also called a central processing unit (CPU); and the co-processor is a low-power-consumption processor configured to process data in a standby state. In some embodiments, the processor 21 may be integrated with a graphics processing unit (GPU), and the GPU is configured to be responsible for rendering and drawing of a content that needs to be displayed by a display screen. In some embodiments, the processor 21 may further include an artificial intelligence (AI) processor. The AI processor is configured to process a computing operation related to machine learning.

The memory 20 may include one or more computer readable storage media, and the computer readable storage medium may be non-transitory. The memory 20 may further include a high speed random access memory and a nonvolatile memory, such as one or more disk storage devices and flash storage devices. In the embodiment, the memory 20 is at least configured to store the follow computer program 201. The computer program, after being loaded and executed by the processor 21, can implement related steps of the data verification method disclosed in any above embodiment. Besides, a resource stored on the memory 20 may further include an operating system 202, data 203 and the like. A storage mode may be temporary storage or permanent storage. The operating system 202 may include Windows, Unix, Linux and the like. The data 203 may include, but not limited to, a file system image, an identity list and a signature file included in the UBI image, data stored on a storage medium and the like.

In some embodiments, the electronic device may further include a display screen 22, an input/output interface 23, a communication interface 24, a power source 25 and a communication bus 26.

Those skilled in the art may understand that a structure shown in Fig. 5 does not constitute limitation on the electronic device, and the electronic device may include more or less components than components shown in the figure.

It may be understood that the data verification method in the above embodiment, if implemented in a form of a software function unit and sold and used as a standalone product, may be stored in a computer-readable storage medium. Based on such an understanding, the technical solutions of this application essentially, a part contributing to conventional technologies, or the entire technical solutions or a part thereof may be presented in the form of a software product. The computer software product is stored in a storage medium to execute all or a part of steps of the methods in the embodiments of this application. The above storage medium includes: a U disk, a mobile hard disk drive, a read-only memory (ROM), a random access memory (RAM), an electrically erasable and programmable ROM, a register, a hard disk, a removable disk, a CD-ROM, a diskette, an optical disc or various media capable of storing a program code.

Based on this, an embodiment of the present invention further provides a computer-readable storage medium, storing a computer program, the computer program, when executed by a processor, implementing steps of the above data verification method.

Functions of all function modules of the computer-readable storage medium in the embodiment of the present invention may be implemented specifically according to the method in the above method embodiment, and a specific implementation process may refer to related descriptions in the above method embodiment, which is not repeated here.

The data verification method and apparatus, the electronic device and the computer-readable storage medium provided by the embodiments of this application are introduced in detail as above. The various embodiments in the specification are described in a progressive mode, each embodiment focuses on description of a difference from other embodiments, and the same or similar parts between the various embodiments may refer to one another. The apparatus disclosed in the embodiment corresponds to the method disclosed in the embodiment, so the apparatus is simply described, and related parts may refer to the description of the method.

Professionals may further realize that units and algorithm steps of all examples described with reference to the embodiments disclosed herein may be implemented in combination with electronic hardware, computer software or a combination of them, and in order to clearly describe interchangeability of hardware and software, composition and steps of each example have been described generally in the above description according to the functions. Whether these functions are executed in a form of hardware or a form of software depends on particular applications and design constraint conditions of the technical solutions. Professional and technical staff may use different methods for implementing the described functions for each particular application, but this implementation is not to be regarded as departing from the scope of this application.

The data verification method and apparatus, the electronic device and the computer-readable storage medium provided by this application are introduced in detail as above. The principle and the implementations of the present invention are set forth herein by using specific examples, and the description of the above embodiments is merely used for helping to understand the method and its core concept of the present invention.

## Claims

1. A data verification method, comprising:
establishing (S101) a UBI image;
mounting (S102) the UBI image in the case of starting a system, and verifying the UBI image;
creating (S103) verification device nodes based on the UBI image in the case that the UBI image passes the verification; and
performing (S104) integrity verification on data stored on a storage medium by using a verification device connected with the verification device nodes after the system starting is completed;
wherein establishing (S101) the UBI image comprises:
generating (S201), according to a code compiling result, a file system image which supports mounting the verification device nodes;
generating (S202) a corresponding identity list according to the file system image, the identity list comprises identity of each data block in the file system image and parent identity of the file system image;
performing (S203) digital signature on the parent identity according to a preset secret key to obtain a signature file comprising the secret key and an encrypted parent identity; and
designating (S204) the whole of the file system image, the identity list and the signature file as the UBI image and setting, for the UBI image, an identity of skipping the performing (S104) of the integrity verification.

2. The data verification method according to claim 1, wherein verifying the UBI image comprises:
reading a pre-stored secret key;
judging whether the pre-stored secret key is consistent with the secret key comprised in the signature file; and
determining that the UBI image passes the verification in the case that the pre-stored secret key is consistent with the secret key comprised in the signature file.

3. The data verification method according to claim 2, further comprising:
decrypting the parent identity comprised in the signature file by using the secret key in the case that the pre-stored secret key is consistent with the secret key comprised in the signature file;
judging whether the parent identity obtained through decryption is consistent with the parent identity comprised in the identity list; and
executing the step of creating verification device nodes based on the UBI image in the case that the parent identity obtained through decryption is consistent with the parent identity comprised in the identity list.

4. The data verification method according to claim 1, wherein creating (S103) verification device nodes based on the UBI image comprises:
creating (S301) a character device based on the UBI image in a partition flashed with the UBI image;
creating (S302) a virtual block device based on the UBI image; and
mounting (S304) the verification device nodes based on the virtual block device.

5. The data verification method according to claim 4, wherein before mounting (S304) the verification device nodes based on the virtual block device, the method further comprises:
judging (S303) whether the UBI image meets a preset starting-up verification demand; and
executing the step of mounting (S304) the verification device nodes based on the virtual block device in the case that the UBI image meets the preset starting-up verification demand.

6. The data verification method according to claim 4, wherein before performing (S104) integrity verification on the data stored on the storage medium by using the verification device connected with the verification device nodes, the method further comprises:
reading data from the storage medium;
performing a data recovery operation on the data by using the virtual block device; and
correspondingly, performing integrity verification on the data stored on the storage medium by using the verification device connected with the verification device nodes comprises:
performing integrity verification on data of which the data recovery operation is completed by using the verification device connected with the verification device nodes.

7. A data verification apparatus, comprising an establishing unit (41), a mounting unit (42), an identity verification unit (43), a creating unit (44) and an integrity verification unit (45); wherein
the establishing unit (41) is configured to establish a UBI image;
the mounting unit (42) is configured to mount the UBI image in the case of starting a system;
the identity verification unit (43) is configured to verify the UBI image;
the creating unit (44) is configured to create verification device nodes based on the UBI image in the case that the UBI image passes the verification; and
the integrity verification unit (45) is configured to perform integrity verification on data stored on a storage medium by using a verification device connected with the verification device nodes after the system starting is completed;
wherein the establishing unit (42) comprises:
a generating sub-unit, configured to generate, according to a code compiling result, a file system image which supports mounting the verification device nodes;
a signature sub-unit, configured to generate a corresponding identity list according to the file system image, wherein the identity list comprises identity of each data block in the file system image and parent identity of the file system image;
an action sub-unit, configured to perform digital signature on the parent identity according to a preset secret key to obtain a signature file comprising the secret key and an encrypted parent identity; and
a setting sub-unit, configured to designate the whole of the file system image, the identity list and the signature file as the UBI image and set, for the UBI image, an identity of skipping the performing of the integrity verification.

8. An electronic device, comprising:
a memory (20), configured to store a computer program (201); and
a processor (21), configured to execute the computer program (201) so as to implement steps of the data verification method according to any one of claims 1 to 6.

9. A computer-readable storage medium, the computer-readable storage medium storing a computer program, wherein the computer program, when executed by a processor, implementing steps of the data verification method according to any one of claims 1 to 6.

## Patentansprüche

1. Datenprüfungsverfahren, umfassend:
Herstellen (S101) eines UBI-Image;
Einbauen (S102) des UBI-Image im Falle des Hochfahrens eines Systems, und Prüfen des UBI-Image;
Erstellen (S103) von Prüfungsvorrichtungsknoten auf Basis des UBI-Image in dem Fall, dass das UBI-Image die Prüfung besteht; und
Durchführen (S104) einer Integritätsprüfung an auf einem Speichermedium gespeicherten Daten durch Verwenden einer mit den Prüfungsvorrichtungsknoten verbundenen Prüfungsvorrichtung, nachdem das Hochfahren des Systems abgeschlossen ist;
wobei das Herstellen (S101) des UBI-Image Folgendes umfasst:
Erzeugen (S201), gemäß einem Codekompilierungsergebnis, eines Dateisystem-Image, das das Einbauen der Prüfungsvorrichtungsknoten unterstützt;
Erzeugen (S202) einer entsprechenden Identitätsliste gemäß dem Dateisystem-Image, wobei die Identitätsliste eine Identität von jedem Datenblock in dem Dateisystem-Image und eine übergeordnete Identität des Dateisystem-Image umfasst;
Durchführen (S203) einer digitalen Signatur an der übergeordneten Identität gemäß einem voreingestellten geheimen Schlüssel, um eine Signaturdatei zu erhalten, die den geheimen Schlüssel und eine verschlüsselte übergeordnete Identität umfasst; und
Kennzeichnen (S204) der Gesamtheit aus dem Dateisystem-Image, der Identitätsliste und der Signaturdatei als das UBI-Image und Einstellen, für das UBI-Image, einer Identität des Überspringens des Durchführens (S104) der Integritätsprüfung.

2. Datenprüfungsverfahren gemäß Anspruch 1, wobei das Prüfen des UBI-Image Folgendes umfasst:
Auslesen eines vorgespeicherten geheimen Schlüssels;
Beurteilen, ob der vorgespeicherte geheime Schlüssel mit dem in der Signaturdatei umfassten geheimen Schlüssel konsistent ist; und
Bestimmen, dass das UBI-Image die Prüfung in dem Fall besteht, dass der vorgespeicherte geheime Schlüssel mit dem in der Signaturdatei umfassten geheimen Schlüssel konsistent ist.

3. Datenprüfungsverfahren gemäß Anspruch 2, ferner umfassend:
Entschlüsseln der in der Signaturdatei umfassten übergeordneten Identität, durch Verwenden des geheimen Schlüssel, in dem Fall, dass der vorgespeicherte geheime Schlüssel mit dem in der Signaturdatei umfassten geheimen Schlüssel konsistent ist;
Beurteilen, ob die durch die Entschlüsselung erhaltene übergeordnete Identität mit der in der Identitätsliste umfassten übergeordneten Identität konsistent ist; und
Ausführen des Schritts des Erstellens von Prüfungsvorrichtungsknoten auf Basis des UBI-Image in dem Fall, dass die durch die Entschlüsselung erhaltene übergeordnete Identität mit der in der Identitätsliste umfassten übergeordneten Identität konsistent ist.

4. Datenprüfungsverfahren gemäß Anspruch 1, wobei das Erstellen (S103) von Prüfungsvorrichtungsknoten auf Basis des UBI-Image Folgendes umfasst:
Erstellen (S301) einer Zeichenvorrichtung auf Basis des UBI-Image in einer mit dem UBI-Image aktualisierten Partition;
Erstellen (S302) einer virtuellen Blockvorrichtung auf Basis des UBI-Image; und
Einbauen (S304) der Prüfungsvorrichtungsknoten auf Basis der virtuellen Blockvorrichtung.

5. Datenprüfungsverfahren gemäß Anspruch 4, wobei vor dem Einbauen (S304) der Prüfungsvorrichtungsknoten auf Basis der virtuellen Blockvorrichtung, das Verfahren ferner Folgendes umfasst:
Beurteilen (S303), ob das UBI-Image eine voreingestellte Hochfahrprüfungsanforderung erfüllt; und
Ausführen des Schritts des Einbauens (S304) der Prüfungsvorrichtungsknoten auf Basis der virtuellen Blockvorrichtung in dem Fall, dass das UBI-Image die voreingestellte Hochfahrprüfungsanforderung erfüllt.

6. Datenprüfungsverfahren gemäß Anspruch 4, wobei vor dem Durchführen (S104) der Integritätsprüfung an den in dem Speichermedium gespeicherten Daten durch Verwenden der mit den Prüfungsvorrichtungsknoten verbundenen Prüfungsvorrichtung, das Verfahren ferner Folgendes umfasst:
Auslesen von Daten aus dem Speichermedium;
Durchführen eines Datenrückgewinnungsvorgangs an den Daten durch Verwenden der virtuellen Blockvorrichtung; und
entsprechend das Durchführen einer Integritätsprüfung an den auf dem Speichermedium gespeicherten Daten durch Verwenden der mit den Prüfungsvorrichtungsknoten verbundenen Prüfungsvorrichtung Folgendes umfasst:
Durchführen einer Integritätsprüfung an Daten, deren Datenrückgewinnungsvorgang abgeschlossen ist, durch Verwenden der mit den Prüfungsvorrichtungsknoten verbundenen Prüfungsvorrichtung.

7. Datenprüfungseinrichtung, umfassend eine Herstellungseinheit (41), eine Einbaueinheit (42), eine Identitätsprüfungseinheit (43), eine Erstellungseinheit (44) und eine Integritätsprüfungseinheit (45); wobei
die Herstellungseinheit (41) dazu konfiguriert ist, ein UBI-Image herzustellen;
die Einbaueinheit (42) dazu konfiguriert ist, das UBI-Image in dem Falle des Hochfahrens eines Systems einzubauen;
die Identitätsprüfungseinheit (43) dazu konfiguriert ist, das UBI-Image zu prüfen;
die Erstellungseinheit (44) dazu konfiguriert ist, Prüfungsvorrichtungsknoten auf Basis des UBI-Image in dem Fall zu erstellen, dass das UBI-Image die Prüfung besteht; und
die Integritätsprüfungseinheit (45) dazu konfiguriert ist, an auf einem Speichermedium gespeicherten Daten eine Integritätsprüfung durchzuführen, durch Verwenden einer mit den Prüfungsvorrichtungsknoten verbundenen Prüfungsvorrichtung, nachdem das Hochfahren des Systems abgeschlossen ist;
wobei die Herstellungseinheit (42) Folgendes umfasst:
eine Erzeugungsuntereinheit, die dazu konfiguriert ist, gemäß einem Codekompilierungsergebnis ein Dateisystem-Image zu erzeugen, das das Einbauen der Prüfungsvorrichtungsknoten unterstützt;
eine Signaturuntereinheit, die dazu konfiguriert ist, eine entsprechende Identitätsliste gemäß dem Dateisystem-Image zu erzeugen, wobei die Identitätsliste eine Identität von jedem Datenblock in dem Dateisystem-Image und eine übergeordnete Identität des Dateisystem-Image umfasst;
eine Aktionsuntereinheit, die dazu konfiguriert ist, eine digitale Signatur an der übergeordneten Identität gemäß einem voreingestellten geheimen Schlüssel durchzuführen, um eine Signaturdatei zu erhalten, die den geheimen Schlüssel und eine verschlüsselte übergeordnete Identität umfasst; und
eine Einstellungsuntereinheit, die dazu konfiguriert ist, die Gesamtheit aus dem Dateisystem-Image, der Identitätsliste und der Signaturdatei als das UBI-Image zu kennzeichnen und für das UBI-Image eine Identität des Überspringens des Durchführens der Integritätsprüfung einzustellen.

8. Elektronische Vorrichtung, umfassend:
einen Speicher (20), der dazu konfiguriert ist, ein Computerprogramm (201) zu speichern; und
einen Prozessor (21), der dazu konfiguriert ist, das Computerprogramm (201) auszuführen, um so Schritte des Datenprüfungsverfahrens gemäß einem der Ansprüche 1 bis 6 zu implementieren.

9. Computerlesbares Speichermedium, wobei das computerlesbare Speichermedium ein Computerprogramm speichert, wobei das Computerprogramm bei seiner Ausführung durch einen Prozessor Schritte des Datenprüfungsverfahrens gemäß einem der Ansprüche 1 bis 6 implementiert.

## Revendications

1. Procédé de vérification de données, comprenant :
l'établissement (S101) d'une image UBI ;
le montage (S102) de l'image UBI dans le cas du démarrage d'un système, et la vérification de l'image UBI ;
la création (S103) de nœuds de dispositif de vérification sur la base de l'image UBI dans le cas où l'image UBI passe avec succès la vérification ; et
la réalisation (S104) d'une vérification d'intégrité sur les données stockées sur un support de stockage en utilisant un dispositif de vérification connecté aux nœuds de dispositif de vérification une fois que le démarrage du système est terminé ;
dans lequel l'établissement (S101) de l'image UBI comprend :
la génération (S201), selon un résultat de compilation de code, d'une image de système de fichier qui prend en charge le montage des nœuds de dispositif de vérification ;
la génération (S202) d'une liste d'identités correspondante selon l'image de système de fichier, la liste d'identités comprenant l'identité de chaque bloc de données dans l'image de système de fichier et l'identité parente de l'image de système de fichier ;
la réalisation (S203) de la signature numérique sur l'identité parente selon une clé secrète prédéfinie pour obtenir un fichier de signature comprenant la clé secrète et une identité parente chiffrée ; et
la désignation (S204) de l'ensemble de l'image de système de fichier, de la liste d'identités et du fichier de signature comme image UBI et la définition, pour l'image UBI, d'une identité de saut de la réalisation (S104) de la vérification d'intégrité.

2. Procédé de vérification de données selon la revendication 1, dans lequel la vérification de l'image UBI comprend :
la lecture d'une clé secrète pré-stockée ;
le fait d'apprécier si la clé secrète pré-stockée correspond à la clé secrète comprise dans le fichier de signature ; et
la détermination que l'image UBI a passé avec succès la vérification dans le cas où la clé secrète pré-stockée correspond à la clé secrète comprise dans le fichier de signature.

3. Procédé de vérification de données selon la revendication 2, comprenant en outre :
le déchiffrement de l'identité parente comprise dans le fichier de signature en utilisant la clé secrète dans le cas où la clé secrète pré-stockée correspond à la clé secrète comprise dans le fichier de signature ;
le fait d'apprécier si l'identité parente obtenue par déchiffrement correspond à l'identité parente comprise dans la liste d'identités ; et
l'exécution de l'étape de création de nœuds de dispositif de vérification sur la base de l'image UBI dans le cas où l'identité parente obtenue par déchiffrement correspond à l'identité parente comprise dans la liste d'identités.

4. Procédé de vérification de données selon la revendication 1, dans lequel la création (S103) de nœuds de dispositif de vérification sur la base de l'image UBI comprend :
la création (S301) d'un dispositif de type caractère sur la base de l'image UBI dans une partition flashée avec l'image UBI ;
la création (S302) d'un dispositif de type bloc virtuel sur la base de l'image UBI ; et
le montage (S304) des nœuds de dispositif de vérification sur la base du dispositif de type bloc virtuel.

5. Procédé de vérification de données selon la revendication 4, dans lequel avant le montage (S304) des nœuds de dispositif de vérification sur la base du dispositif de type bloc virtuel, le procédé comprend en outre :
le fait d'apprécier (S303) si l'image UBI satisfait une demande de vérification de démarrage prédéfinie ; et
l'exécution de l'étape de montage (S304) des nœuds de dispositif de vérification sur la base du dispositif de type bloc virtuel dans le cas où l'image UBI satisfait la demande de vérification de démarrage prédéfinie.

6. Procédé de vérification de données selon la revendication 4, dans lequel avant la réalisation (S104) de la vérification d'intégrité sur les données stockées sur le support de stockage en utilisant le dispositif de vérification connecté aux nœuds de dispositif de vérification, le procédé comprend en outre :
la lecture de données provenant du support de stockage ;
la réalisation d'une opération de récupération de données sur les données en utilisant le dispositif de type bloc virtuel ; et
de la même façon, la réalisation de la vérification d'intégrité sur les données stockées sur le support de stockage en utilisant le dispositif de vérification connecté aux nœuds de dispositif de vérification comprend :
la réalisation de la vérification d'intégrité sur les données pour lesquelles l'opération de récupération de données est terminée en utilisant le dispositif de vérification connecté aux nœuds de dispositif de vérification.

7. Appareil de vérification de données, comprenant une unité d'établissement (41), une unité de montage (42), une unité de vérification d'identité (43), une unité de création (44) et une unité de vérification d'intégrité (45) ; dans lequel
l'unité d'établissement (41) est configurée pour établir une image UBI ;
l'unité de montage (42) est configurée pour monter l'image UBI dans le cas du démarrage d'un système ;
l'unité de vérification d'identité (43) est configurée pour vérifier l'image UBI ;
l'unité de création (44) est configurée pour créer des nœuds de dispositif de vérification sur la base de l'image UBI dans le cas où l'image UBI passe la vérification avec succès ; et
l'unité de vérification d'intégrité (45) est configurée pour réaliser la vérification d'intégrité sur des données stockées sur un support de stockage en utilisant un dispositif de vérification connecté aux nœuds de dispositif de vérification une fois que le démarrage du système est terminé ;
dans lequel l'unité d'établissement (42) comprend :
une sous-unité de génération, configurée pour générer, selon un résultat de compilation de code, une image de système de fichier qui prend en charge le montage des nœuds de dispositif de vérification ;
une sous-unité de signature, configurée pour générer une liste d'identités correspondante selon l'image de système de fichier, dans lequel la liste d'identités comprend l'identité de chaque bloc de données dans l'image de système de fichier et l'identité parente de l'image de système de fichier ;
une sous-unité d'action, configurée pour réaliser une signature numérique sur l'identité parente selon une clé secrète prédéfinie pour obtenir un fichier de signature comprenant la clé secrète et une identité parente chiffrée ; et
une sous-unité de définition, configurée pour désigner l'ensemble de l'image de système de fichier, de la liste d'identités et du fichier de signature comme image UBI et définir, pour l'image UBI, une identité de saut de la réalisation de la vérification d'intégrité.

8. Dispositif électronique, comprenant :
une mémoire (20), configurée pour stocker un programme d'ordinateur (201) ; et
un processeur (21), configuré pour exécuter le programme d'ordinateur (201) de sorte à mettre en œuvre les étapes du procédé de vérification de données selon l'une quelconque des revendications 1 à 6.

9. Support de stockage lisible par ordinateur, le support de stockage lisible par ordinateur stockant un programme d'ordinateur, dans lequel le programme d'ordinateur, lorsqu'il est exécuté par un processeur, met en œuvre les étapes du procédé de vérification de données selon l'une quelconque des revendications 1 à 6.
